# EUROPEAN PATENT SPECIFICATION

(11) **EP 2 071 779 B1**
(45) Date of publication and mention of the grant of the patent: **31.08.2011**
(21) Application number: 08168799.8
(22) Date of filing: 14.12.2007
(51) Int. Cl.: H04L 12/56, H04W 84/18, H04L 29/08

(54) **Method and apparatus for operating a wireless network for gathering data**
Verfahren und Vorrichtung zum Betrieb eines drahtlosen Netzwerks zum Sammeln von Daten
Procédé et appareil pour utiliser un réseau sans fil afin de rassembler des données

(43) Date of publication of application: 17.06.2009
(62) Divisional of application: 07123307.6
(73) Proprietor: NTT DoCoMo, Inc., Tokyo (JP)
(72) Inventor: Munaretto, Daniele, 80335 Munich (DE); Widmer, Joerg, 81539 Munich (DE); Rossi, Michele, 44100 Ferrara (IT); Fasolo, Elena, 35027 Noventa Padovana, Padova (IT)
(74) Representative: Betten & Resch

(56) References cited:
- US-A1- 2006 146 791
- DANIELE MUNARETTO ET AL: "Resilient Coding Algorithms for Sensor Network Data Persistence" WIRELESS SENSOR NETWORKS; [LECTURE NOTES IN COMPUTER SCIENCE], SPRINGER BERLIN HEIDELBERG, BERLIN, HEIDELBERG, vol. 4913, 29 January 2007 (2007-01-29), pages 156-170, XP019086455 ISBN: 978-3-540-77689-5
- DAN WANG ET AL: "Partial Network Coding: Theory and Application for Continuous Sensor Data Collection" QUALITY OF SERVICE, 2006. IWQOS 2006. 14TH IEEE INTERNATIONAL WORKSHOP ON, IEEE, PI, 1 June 2006 (2006-06-01), pages 93-101, XP031018913 ISBN: 978-1-4244-0476-6
- SANG WU KIM ED - CHUNHUA SUN ET AL: "Concatenated Network Coding for Large-Scale Multi-Hop Wireless Networks" WIRELESS COMMUNICATIONS AND NETWORKING CONFERENCE, 2007.WCNC 2007. IEE E, IEEE, PI, 1 March 2007 (2007-03-01), pages 985-989, XP031097325 ISBN: 978-1-4244-0658-6
- ELENA FASOLO ET AL: "In-network aggregation techniques for wireless sensor networks: a survey" IEEE WIRELESS COMMUNICATIONS, IEEE SERVICE CENTER, PISCATAWAY, NJ, US, vol. 14, no. 2, 1 April 2007 (2007-04-01), pages 70-87, XP011181083 ISSN: 1536-1284

## Description

### FIELD OF INVENTION

The present invention relates to a method and an apparatus for operating a wireless network for gathering data.

### BACKGROUND OF THE INVENTION

In systems for continuous and long-term data gathering mobile phones or other types of communication-capable devices continuously collect data readings from the environment. The problem to solve is to allow an efficient data gathering, redistribution and, in general, processing of this data in wireless networks composed of resource-constrained wireless terminals. Standard solutions solved this problem by means of plain opportunistic routing (often referred to as epidemic routing), where data is simply copied from node to node until it reaches the final destination. These solutions are effective in the sense that they do not require a complete knowledge of the network topology, as they operate through local interactions. However, these schemes may lack of robustness in the presence of node, link or path failures. Distributed network coding may be used to cope with these impairments. Network coding is e.g. described in R. Ahlswede, N. Cat, S.-Y. Li, R. Yeung, "Network information flow", IEEE Trans. on Information Theory, vol. 46, no.4, pp. 1204-1216, July 2000, or in M. Effros, T. Ho, D. Karger, R. Koetter and M. Medard, "Randomized distributed network coding", US Patent Application, US 2005/0152391 A1, Jul 14, 2005, or in P. A. Chou, Y Wu and K. Jain, "Practical Network Coding"; in 51st Allerton Conf. Communication, Control and Computing, Oct 2003.

With network coding nodes transmit packets coded over (multiple) original information packets, which may belong to different data sources. Coding gives significant advantages in terms of energy consumption, robustness to node failures and recovery delay. In addition, network coding solutions have been proven to be effective in distributed networks, in the presence of mobility and with no need to know the network topology. On the downside, simple network coding schemes usually require an extensive use of memory for the decoding process.

Memory is often a scarce resource in existing small embedded devices such as cellular phones and sensors. For instance, sensors usually have a small Random Access Memory (RAM) and a larger, but rather slow, FLASH memory (i.e., 4 KB of RAM and around 512 KB of FLASH for typical sensor motes as MicaZ. The most basic cellular phones, instead, feature processors using between 8Mb to 32Mb of SRAM or PSRAM, in combination with 16-64Mb of NOR Flash).

To limit memory requirements, data can be grouped into generations. Generations refer to either data generated within the same geographical area or within the same time interval (or to a combination of both), and only data of the same generation is coded/decoded at a time.

In the following there will be described some prior art approaches to operating wireless sensor networks.

In P. Juang, H. Oki, Y Wang, M. Martonosi, L.S. Peh and D. Rubenstein, "Energy-efficient Computing for Wildlife Tracking: Design Tradeoffs and Early Experiences with ZebraNet", ASPLOS, San Jose, CA, Oct 2002, the authors consider a mobile WN including a mobile collector/base station (BS). Nodes forward data cooperatively (and opportunistically) to the BS and store redundant copies of this data in their memory. In the presence of limited storage, nodes prioritize their own data readings by deleting from the memory the oldest data received (i.e. they use "a data replacement scheme"). Moreover, once their own data is transferred to the BS, it is promptly removed from the memory. This simple data management scheme is mainly tolerant to the loss of data, whereas it completely disregards the data persistence within the network.

In A. Kamra, V. Misra, J. Feldman and D. Rubenstein, "Growth Codes: Maximizing Sensor Network Data Persistence", In ACM SIGCOMM, Pisa, Italy, Sept 2006, the authors consider the case of nodes that periodically generate new data, e.g., temporal generations, defined as collection of data generated within the same interval time by all nodes in the WN. They do not take into account the case of large scale networks. In fact, in Kamra et al. nodes keep more generations in RAM at the same time, overwriting (i.e., replacing) old data with new one. Due to memory constraints, however, this is not feasible in large networks.

In C. Fragouli, J. Widmer, and J.Y Le Boudec, "Efficient broadcasting using network coding", accepted for IEEE/ACM Transactions on Networking, 2007, a simple distributed generation management is designed. The authors propose to limit the number of packets inserted in any given generation, based on the idea of using specific generation size thresholds, both in the time and spatial domains. The threshold might be adapted to the available RAM memory of the nodes. Specifically, nodes are allowed to insert packets into a spatial generation only if they belong to the k-hop neighborhood of the node where such generation was originated.

D. Munarefto, J. Widmer, M. Rossi and M. Zorzi, "Resilient Coding Algorithms for Sensor Network Data Persistence", submitted to EWSN, Sept 2007, presents a simple buffer scheme for processing multiple generations simultaneously. However, this solution once again only works for small scale networks, where the data generated by all nodes during, e.g., the same generational period, can all be stored in the node memory.

In D. Wang, Q. Zhang and J. Liu, "Partial Network Coding: Theory and Application for Continuous. Sensor Data Collection", 1WOoS, 14th IEEE International Workshop on Quality of Service, New Haven, CT, USA, June 2006, there is presented a further set of practical rules for continuous data collection, namely a concept of Partial Network Coding combined with a data replacement algorithm. The authors propose a strategy to efficiently store continuously generated data in buffers of limited size. In detail, according to the proposed scheme the network is subdivided into clusters. Data within the same cluster is coded together, whereas data belonging to different clusters is never mixed. This makes it possible to deal with the limited buffer sizes. The authors propose to exploit the data replacement paradigm to provide a continuous data gathering.

A problem with this approach is that this does not guarantee any data persistence within the network. In addition, as data belonging to a cluster is only disseminated within the cluster and then moved to the base station, only the base station will be potentially able to decode all data packets, whereas network nodes will only get a partial view of the data generated within the network.

The concept of clustered network coding is introduced in K. S. Wu, "Concatenated Network Coding for Large-Scale Multi-Hop Wireless Networks", in Proc. of WCNC 2007, Hong Kong, Mar 2007. The authors propose a "concatenated" network coding technique that incorporates multi-level coding across a large-scale network. They decompose the network into several small networks (clusters) and then they concatenate these clusters along the routing path. The main aim is to simplify both the encoding and decoding processes as each cluster processes only a single generation. This is particularly important, because the nodes can perform block encoding based on local information only. The network coding is performed within each cluster, and each node only processes the generation assigned to its own cluster.

The clustering approach together with "network coding" of the data within a cluster improves the performance in view of limited memory (and computational) resources. However, there remains the problem of the persistence of the data within the network.

As an example of real applications, one may consider an end user, which sense environmental data and needs to send it from, say, his mobile phone to a WLAN hot spot (low cost technology). One may assume that due to user mobility, etc., this hot spot is often not available for longer periods of time. How could this user store this data in the Internet without losses, avoiding for example the "unsatisfactory" mechanism of data replacement (e.g., new data that overwrites old data in the same memory location, to cope with the very limited storage size)?

This illustrates the problem of the "persistence", reliability and robustness of the data within the network, and it shows that there is still a need for an improved operation method for wireless sensor networks.

### SUMMARY OF THE INVENTION

The present invention is defined in the independent claims. The dependent claims define embodiments of the invention.

According to claim 1 there is provided a method for operating a wireless network for gathering data

This special combination of method steps the overhead which comes along with the centralized deterministic approach of clustering and generation movement while still improving the persistency of the data in the network.

The embodiment according to claim 2 enables the node to choose the generation which is to be recovered next. These packets may be stored in a secondary (or minor) buffer which initially can be empty because initially the node belongs to a specific cluster and to this cluster initially belongs a specific generation which is then initially to be processed by this node.

According to the embodiments of claims and 4 the keeping of the already processed generation in the buffer (and its distribution to other nodes) assists other nodes with completing the not yet fully decoded generation. Keeping the data in coded form increases the distribution efficiency and reduces the necessary memory space.

The embodiment according to claim 5 avoids clusters becoming too large. E.g. a packet may carry a hop counter that indicates the distance (in number of hops) to the furthest nodes where data originated, over which the packet is coded.

The embodiment according to claim 6 enables an efficient usage of the memory resources of the nodes.

The embodiment according to claim 7 enables a decentralized approach for deleting data from the persistent memory.

According to claim 8 there is provided a node for operating a wireless network for gathering data.

The embodiment according to claim 15, provides for a computer program.

### DESCRIPTION OF THE DRAWINGS

Figs. 1A and 1B schematically illustrate scenarios where the embodiments of the invention may be applied.
Fig. 2 schematically illustrates the clustering of a wireless network with different generations.
Fig. 3 schematically illustrates the movement of generations according to one embodiment of the invention.
Fig. 4 schematically illustrates the movement of generations according to a further embodiment of the invention.
Fig. 5 schematically illustrates the movement of generations according to a further embodiment of the invention.
Fig. 6 schematically illustrates the movement of generations according to a further embodiment of the invention.
Fig. 7 schematically illustrates the movement of generations according to a further embodiment of the invention.
Fig. 8 schematically illustrates the clustering according to a further embodiment of the invention.

### DETAILED DESCRIPTION

First some terms used in the following description will be defined.
BS: base station
CH: cluster head
NC: network coding
RAM: random access memory
WN: wireless network
WSN: wireless sensor network

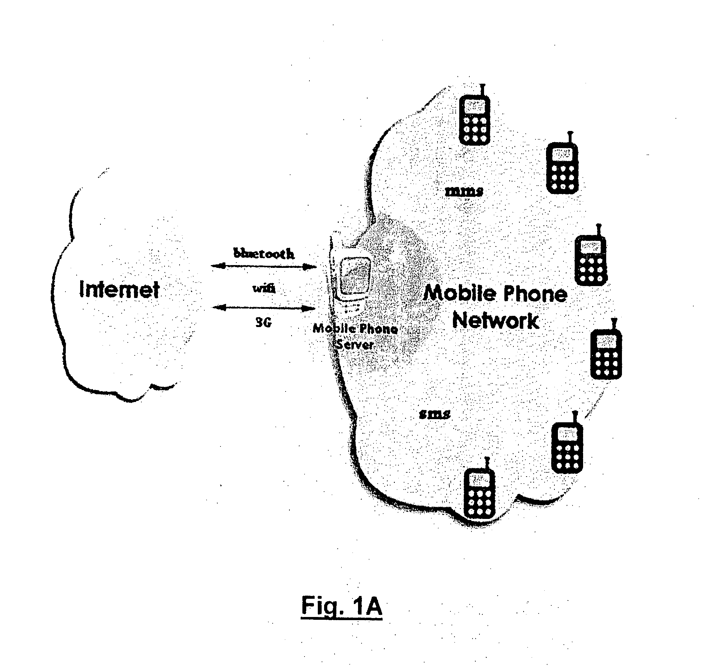

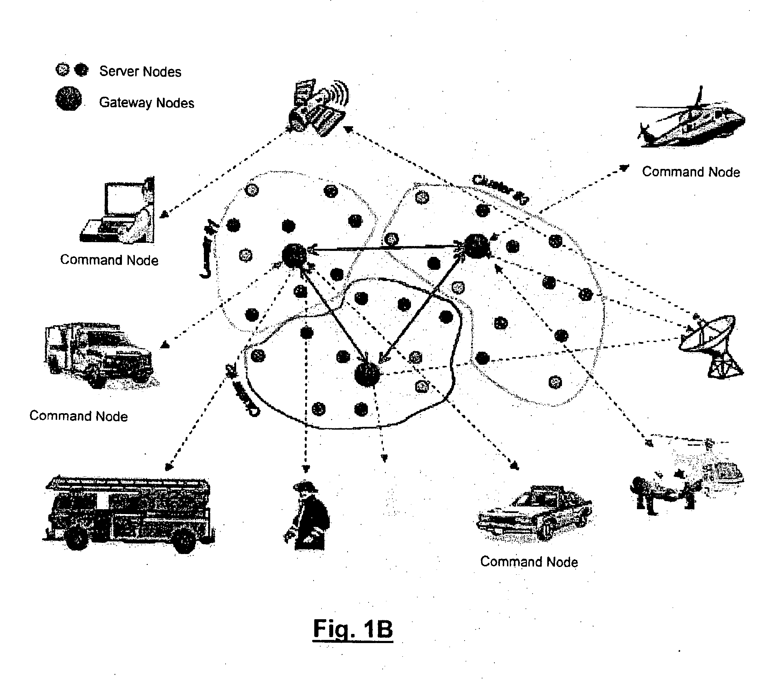

Figs. 1A and 1B schematically illustrate environments where the present invention may be applied. Fig. 1A shows a configuration where multiple mobile phones are gathering data and send it to a mobile phone server (a data sink) from where it is sent to the internet.

Fig. 1B illustrates a similar scenario; however, here there are several clusters, each having a cluster head from where the data is then sent (e.g. over the internet) to the respective locations where it is needed. Applications of such scenarios are urban and environmental mapping and monitoring, alarms, surveillance, security and disaster management through mobile phones, urban services for supporting hospitals, enterprises, etc.

In the following there will be described embodiments of the invention which may be employed in such scenarios. The embodiments particularly deal with the problem that (at least for some time) no sinks of data are available, whereas persistence of the data in the network nevertheless should be maintained. Some embodiments are particularly suitable to be applied in environments with sparse resources (such as memory and computational power).

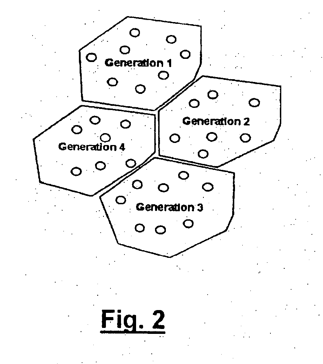

To cope with the limited memory resources, network coding is usually applied to specific groups of packets - so-called generations. Such a generation can for example encompass the packets generated in a cluster of nodes (and/or the packets generated within a certain period of time). Fig. 2 schematically illustrates such a scenario where the whole wireless network is divided into four clusters, and each cluster works on a corresponding generation of packets.

Within such a cluster, coded information is propagated until decoding is complete (i.e., all nodes within a cluster have collected the information). Coding is a method of efficiently distributing the data within a cluster, and will be briefly explained in the following. Assume e.g. that node 1 of cluster 1 collects the data from its sensor (data 1), and it receives the sensor data from node 2 (data 2). The goal now is to distribute all the data from all the sensors of the nodes of the cluster among all the nodes of the cluster, so that each node has a complete picture of the data. For that purpose node 2 may combine by some algorithm data 1 and data 2 (which it received from sensor node 2), and then transmits it to other nodes. The nodes which receive such "coded data" may decode it by a suitable decoding algorithm to recover the original (undecoded) data 1 and data 2. In this manner (by transmitting coded data and decoding it in the receiving nodes) the transmission capacity can be made use of more efficiently. Moreover; a single node which receives data through the coding has actually knowledge about data from more than one node, thereby improving the persistency of the data in the network (e.g. in case of a loss or failure of a node). The actual coding can be done using known mechanisms for coding as known in the prior art.

In order to further increase the resilience and persistence within the whole network, according to one embodiment there is performed a processing of the data contained in different clusters. This is substantially different from previous approaches. In the prior art each cluster is working only on a single generation belonging only to this cluster, and the generations of a specific cluster are not distributed to other clusters.

By actually moving generations over the WN it becomes possible to optimize the energy consumption, overhead, delays, nodes' lifetime and data persistence. Continuous data collection is crucial for a wide range of applications. Specifically, lossless applications require good performance in terms of data reliability and persistence, while for that purpose current solutions use data replacement mechanisms. By using generation management (using the movement of generations over clusters) one may efficiently disseminate data in resource constrained WNs, in the face of memory limitations. It ensures high resilience to losses, node and link failures as well as data persistence, by storing data within the network in a distributed manner.
In the following further embodiments are explained in somewhat more detail.

Given a WN with N nodes, where N >> 1, one faces the problem of handling information packets generated and spread over such WN. Most of the mobile phones and cellular sensors can hold in Random Access Memory (RAM) only a limited number of information packets at a time. Hence, they are not able to collect all the information packets coming from different applications over the WN (i.e., it is not possible to use a single global generation).

As a consequence, according to embodiments of the invention the WN is split into sub-WNs as shown in Fig. 2. This is done in a "starting phase" which is now described in the following. The network is organized in clusters, where each of them matches a specific generation at the very beginning (see Fig. 2). Hence, nodes belong to one of M clusters, with corresponding cluster indices from 1 to M. According to one embodiment a condition for the cluster size is that the corresponding generation should fit entirely into the nodes' RAM memory Otherwise, constant swapping of information to and from FLASH memory will cause high energy consumption. Prior work describes different efficient solutions to generate clusters in a distributed manner, see e:g. D. Wei and A. H. Chan, "energy Efficient Dynamic Cluster Algorithm for Ad Hoc Sensor Network", In Proc. of the First IEEE Intern. Conf. on Wireless Broadband and Ultra Wideband Communications (Aus Wireless 2006), Sidney, Australia, Mar 2006, or O. Younis and S. Fahmy, "Distributed clustering in ad-hoc sensor networks: A hybrid, energy-efficient approach", In Proc. of the IEEE Conference on Computer Communications (INFOCOM), Hong Kong, Mar 2004.

Therein cluster heads (CHs) are elected through mechanisms which take in account node and network parameters, such as residual energy, hop-distances, etc. The embodiments of the invention do not intend to propose a novel clustering scheme, but the embodiments of the invention may use any suitable existing one.

After the clusters have been determined in the starting phase, there comes another phase which deals with cluster management and processing of multiple generations in the WN. This phase will now be described in somewhat more detail.

There are different embodiments which deal with different approaches for the distribution of generations, namely a deterministic-centralized and a random-distributed option for handling the information flow, e.g. the movement of generations over the WN.

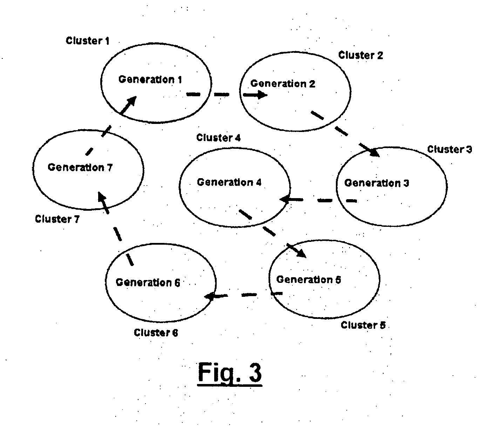

In the former case, nodes belong to the same cluster throughout the entire data gathering and generations move from cluster to cluster, monitored and handled by the cluster-head and the border nodes of each cluster. The border nodes know the neighboring clusters' recovery status by overhearing messages and send this information to the cluster-head, which tells all the nodes within the cluster which generation to process. In this way, the synchronization among clusters is feasible and allows clusters to reduce idle periods, e.g. time intervals without processing any new generation. Moreover, nodes will reduce the amount of energy consumed to recover all the generations and the time needed to achieve the full nodes' coverage of the information spread over the WN. Then, they can start quickly a new temporal generation. The way we handle the information flow is based on a simple virtual linked list: each cluster knows, e.g. by messaging among neighboring clusters, which is the successor/predecessor. In Fig. 3 there is shown such mechanism. Each cluster has a successor and a predecessor, and e.g. cluster 1 at first operates (gathers, codes, disseminates and decodes or recovers) generation 1, cluster 2 operates on generation 2, and so on Then the generations move from each cluster to its corresponding successor. In the embodiment shown in Fig. 3 there is shown only one "circle", but one may note that such a scheme is highly flexible in that the list can assume different lengths (i.e, there might be a single list that contains all the clusters or multiple lists that contain a few nodes each, so that each "virtual link list" defines a corresponding circle of nodes where each node has a successor and a predecessor) depending on the application requirements.

Now an embodiment with random distribution of the generations will be briefly described. For the random-distributed case, generations move over the WN in a manner similar to random walks. While recovering the current generation, nodes overhear packets from other (e.g. neighboring) generations and store them (e.g. in a small separate buffer in RAM, which hence allows only a low number of stored packets). When the current generation is fully recovered, nodes choose which generation to start with based on the number of information units (e.g. packets) received from each neighboring generation: the highest number determines the new generation to recover. With such a mechanism, there is no centralized information flow control as in the deterministic-centralized scheme. Also in such a case there are no fixed clusters. Actually there are only "virtual clusters" which are formed by those nodes which currently are operating on the same generation. The generations move over the network by a random mechanism, and in the same manner the "virtual clusters" are reshaped continuously. The virtual clusters may be initially determined, e.g. by an administrator setting up the network or by some self-organizing scheme which determines for each node to which virtual cluster it belongs initially. Such an initial cluster separation may look like the one shown in Fig. 1. Initially also like in the previous case the cluster one operates on generation 1, cluster 2 on generation 2 and so on. Then, however, as the network continues to operate, the cluster members are changing by the described random mechanism which is based on the overheard information from other generations.

The described random mechanism is beneficial in terms of ease of deployment and absence of messages exchanged among clusters to determine the generations' movement. However, the drawback is that clusters might stop recovering : new generations because they are missing in the neighboring clusters. Hence, for applications requiring full spread of information over the WN, this scheme might be less suitable. For more loss tolerant applications, it is better suitable than the centralized one since it does not require control messages (low overhead, and higher robustness to link/nodes corruptions or failures).

The choice between these two options depends on the application, e.g., how much information has to be spread and stored in the whole WN or in the single cluster, which kind of information is considered relevant for each cluster, when to start with new readings to group on a new temporal generation before the current one is fully recovered over the whole WN, and so on. Hence, the pro/cons may be summarized as follows:
1. Deterministic-centralized option:
   - Pros: optimization of the cluster size according to the generation sizes; control of the data dissemination in order to guarantee the same level of dissemination for each generation; synchronization among nodes;
   - Cons: additional overhead required to maintain the clusters structure, especially in a dynamic environment;
2. Random-distributed option:
   - Pros: no additional overhead required, asynchronous dissemination thus leading to better performance in terms of delay, easy to adapt to dynamic environment;
   - Cons: inhomogeneous dissemination process, it might cause information losses or obstacle to the dissemination process.

In the following further embodiments using the deterministic-centralized approach will be described in somewhat more detail.

Once nodes have fully recovered the starting generation (corresponding to their own cluster), they write it into a persistent memory such as e.g. the FLASH memory, usually several times larger than the RAM in size, but more energy consuming for reading and writing than the RAM memory. This helps to prolong the lifetime of the information packets, since the FLASH memory is large enough to hold a huge number of sensed data cumulated during the continuous data collection:

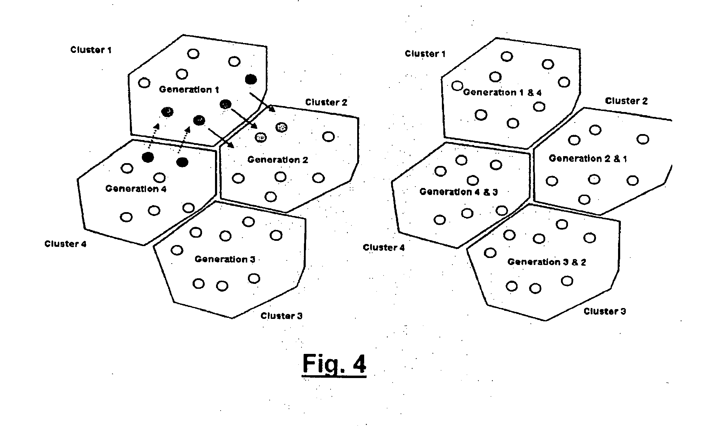

After the current generation is written to persistent memory, it can be substituted with a new one coming from a neighboring cluster. This is schematically shown in Fig. 4. Border nodes, by messaging to border nodes belonging to the neighboring cluster, start collecting a new generation (left side, Fig. 4) until the full recovery is achieved (right side, Fig. 4). This will be described on somewhat more detail in the following.

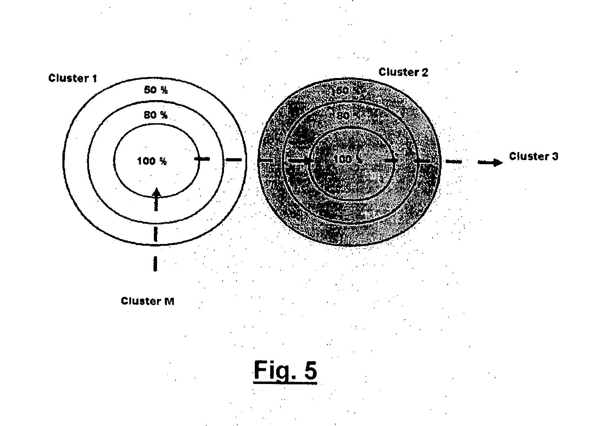

In Fig. 5, there is illustrated a scenario where two neighboring clusters are ready to start collecting a new generation. Data spread over a generic WN, usually leads to achieve high decoding/recovering rate in the central area of a cluster, where nodes are in a data traffic zone of high density. In fact, for most of the cases, the central nodes of a cluster benefit from having the highest traffic density over the whole cluster (or the WN).

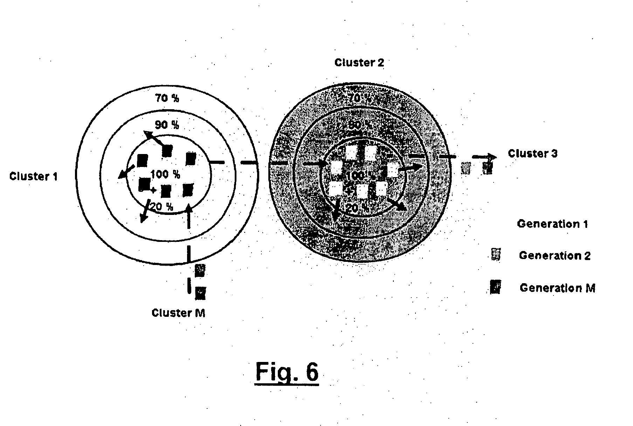

This is schematically illustrated in Fig. 6. Cluster 1 initially recovers generation 1 and receives generation M from cluster M. The received packets accumulate in the central nodes, just because of the higher traffic density. Thus, in the central nodes the recovery (decoding) goes fastest, because here there is the highest likelihood to receive new information.

To initiate a movement of a generation to the next cluster at a time where only the central nodes of the next cluster have fully recovered the information of their own current generation, the cluster heads can establish a route between them (using a suitable multi-hop routing protocol). Packets for the new generation that is to be moved can now directly travel from center to center (via the border nodes).

The central nodes, first of all the nodes, start recovering a new generation (i.e. 100% of old data recovered, 20% of new one), while continuing to spread old data to the neighborhood to allow all other nodes of the cluster to finish their recovery. As shown in Fig: 6, data of generation 1 is spread to cluster 2 (where it accumulates in the center due to the direct dissemination from the center of cluster 1 to the center of cluster 2). Similarly data of generation 2 is spread to cluster 3.

The process of disseminating a generation to the centre of a new cluster is a possibility of distributing a generation to a new cluster according to one embodiment. Alternatively, it would be possible just propagate the generation into the next cluster from the border as described in connection with Fig. 4, once every node of the cluster has decoded all packets of the generation. But since the centre will usually decode first (or be faster with the decoding procedure due to the high traffic density), according to one embodiment one may force propagation of information from centre to centre, thus allowing to start with the generation movement actually before all nodes of the cluster have decoded everything.

This process according to one embodiment will now be explained in somewhat more detail. For example, the cluster head knows, by messaging, if in the middle of the cluster the recovery is complete. Then, it triggers the border nodes (the cluster head knows who are the clusters that are its predecessor and successor) to let information reach these middle nodes. Thus, such nodes (the middle nodes) will start processing the new generation and will help at the same time the other nodes, which have not yet recovered the old generation, sending old information, alternated with information from the new generation. It should be noted, however that the old and new generations are not "mixed" in the sense that for each packet it is always be possible to identify to which generation it belongs to. For example each packet may have an identifier which identifies the generation to which it belongs. In this manner the generations can be handled properly without loosing track which generation at a certain moment is processed where (in which node and in which cluster).

In the following there will be explained how according to one embodiment it is decided when to start to process a new generation by starting to recover it (i.e. to decode the packets of the new generation). It should be noted in this context that a node according to one embodiment never recovers (i.e. decodes) more than one generation at a time. Recovery of the new generation according to one embodiment will start when the old one is completed. According to an additional or alternative criterion to start recovery of a new generation is when no more packets for the old generation arrive for some time and the node concludes therefrom that the old generation cannot be recovered anymore. But whenever a node (e.g., one of the centre nodes) has fully recovered, it may start with the next generation that is already being moved into its own cluster. Nodes who have not fully recovered may store these packets from another generation in the secondary buffer for later recovery when they are done with the current generation

In the following there will be explained how according to one embodiment a node knows that a generation has been completely decoded (so that it may start to recover the next generation). In the centralized mechanism according to one embodiment nodes know the size of the other generations from their cluster head (CH). Therefore a node knows when it has completely recovered a certain generation. In the random case (which will be explained in more detail later), since the clusters know at the very beginning the size of their first generation (that coincides with the original cluster), they may according to one embodiment guess that the size of future generations is close to their own first generation size. As soon as they can decode all the symbols of that generation, they just compare the size of the current generation with the previous one(s). If the size of current generation then does not deviate from the previous one(s) too much (e.g. by not exceeding a threshold), the node may conclude that it has completely recovered this generation.

It should be noted that according to one embodiment a node may have a secondary buffer where it stores packets which are overheard and do not belong to the generation which is currently processed. These generations may be stored in the secondary buffer, while the primary buffer is used for the currently recovered generation of packets. The packets stored in the secondary buffer may then be used (and possibly moved to the primary buffer) once the current generation has been completely recovered (decoded)

Nodes that can hold only one generation at a time (in the "primary buffer" or in the "buffer" if there is only one buffer at all) may start recovering a new generation shrinking the old information toward the bottom of the buffer, in accordance with packet after packet being received from the new generation. In this way nodes can help neighbors which have not yet completed the recovery of the old generation, still sending packets belonging to the old generation. At the same time, they ensure that, as soon as the old generation recovery process is over, they will start with the new information packets received and stored previously which may have e.g. been stored in a part of the non-persistent memory which has been freed from (a part of) the already recovered generation to store or buffer the new generation therein,

The packets of the new generation may be written into the buffer where the old generation data are currently held. As mentioned, the old generation data may be shrinking as the new data comes in. The old generation data may be kept in combined or coded form, so that it occupies less memory and can be more efficiently distributed. This will be explained later in somewhat more detail for the case of the random approach, but it can be used as well in the deterministic approach.

According to another embodiment, for the purpose of keeping the old generation data it could also be possible to reserve in general a part of the memory (e.g. the RAM) to store new generation packets which may then be used for recovery once the current generation has been fully recovered. It may be noted already now that this mechanism in principle is similar to the buffer explained late in connection with the random-distributed algorithm, where also new generation packets are buffered for later use.

According to one embodiment, once nodes have fully recovered the current generation, they write it into the persistent memory such as FLASH memory, usually several times larger than the RAM in size, but more energy consuming for reading and writing than the RAM memory. However with long term data gathering it might happen that the FLASH memory cannot host any further generations. At this point, nodes may decide which generations to delete from the persistent memory to free up storage, and which to keep. In one embodiment with a centralized setting, each cluster-head can decide which generations to delete from the FLASH of all nodes within the cluster, based on agreements arranged a priori by all the cluster-heads. Another simple solution according to one embodiment is to let the cluster-head choose which nodes within the cluster should delete a specific generation. This allows maintaining a reasonable variety of available generations within a single cluster.

In the following there will be described some embodiments where the management of generations is based on a random approach. The starting conditions here basically are the same as with the deterministic approach. Initially, nodes are organized in N clusters; say from cluster 1 to N. Each cluster corresponds to a specific generation. Thus, packets generated by spatially close by nodes, are likely to belong to the same generation. Each node is equipped with a buffer that can hold all packets belonging to the same generation. There is also a further (typically but not necessarily smaller) buffer . (which may be a part of the other buffer or a separate one) to store overheard packets of different generations.

In the first dissemination phase, nodes process data belonging to their own clusters's generation. What differs from the previous deterministic approach is how the distribution of the generations is performed. In the random-distributed option each node can decide: autonomously to process further generations according to criteria such as its own buffer situation, position and capabilities and without any synchronization with other nodes in the same cluster. In this way, a completely distributed generation management can be implemented thus reducing the overhead introduced in maintaining and synchronizing the cluster structure.

According to one embodiment the management of the distribution of generations between the nodes is based on overhearing nodes. E.g., nodes which are processing their own generations may overhear packets of different types (different generations, e.g. neighboring generations). They can store this information in the secondary buffer. Based on the information units stored in the secondary buffer a node may then decide which generation to process next (by decoding it and forwarding coded packets to its neighbors). E.g. a node may chose the generation of which most information units (or packets) are stored in the buffer as the one which is to be processed next.

The decision when to start processing a next generation may be made once the node has fully processed (decoded or recovered) its current generation. Then the node may start processing the next generation based on the content of the buffer where the overheard packets are stored.

Such an embodiment implements a distributed cluster formation: after nodes have processed their own generation, they start to process another packet type. As mentioned, for that purpose overhearing nodes can decide the next generation to process by looking at their secondary buffer content.

However; it may happen that a node has no content in its secondary buffer. For nodes without packets in their secondary buffer other criteria are needed to decide to which cluster they should join by starting the corresponding next generation. One solution is to wait until a packet from a different generation is received, and this packet is then chosen as the first packet of the next generation to be processed, in other words the next generation then is the one to which this packet belongs.

The described approach implements a kind of "virtual cluster rotation" or "virtual cluster movement According to the generation management performed by each node, "virtual clusters" are formed by nodes which are processing the same generation or generations.

It should be noted that a node may hold in its memory data of multiple generations, the one which it is currently processing at the moment (by decoding the data and forwarding it to other nodes) and the ones which are received from overhearing. However, a node only starts decoding a new generation after it has finished decoding the current one.

In the following some further embodiments will be described in somewhat more detail.

At first the distributed generation management by overhearing nodes will be described in somewhat more detail.

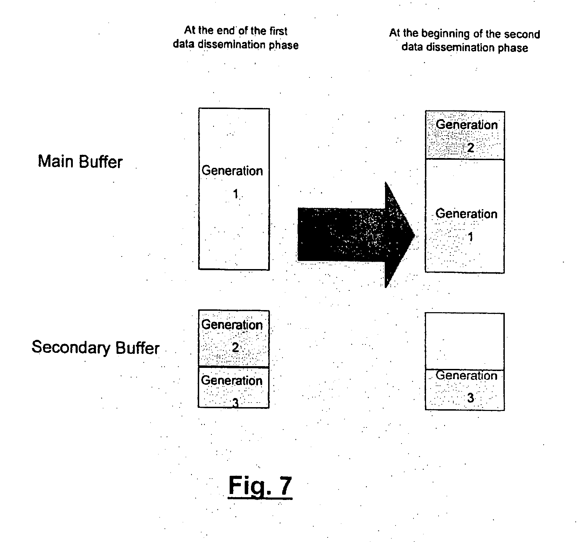

When a node has collected all packets of its own generation, its first data dissemination phase is completed and it can start to process the next generation. At the end of this first phase, its buffer content can be represented as in Fig. 7. In the main buffer it has all the packets of its own generation (generation 1) and in the secondary buffer it has some overheard packets of different generations (generations 2 and 3). This could e.g. happen to boundary nodes, i.e., the nodes placed between clusters as they can receive packets of different generations. According to the situation of the secondary buffer, the node could decide to process the generation of which more packets are stored in the buffer. Referring to Fig. 7, one can recognize that the node will chose as next generation the generation 2 because it has more packets or information units in the buffer than generation 3. It therefore leaves the packets belonging to the generation 3 in the secondary buffer. It should be noted that this decision can be taken in a completely distributed way. Nodes have only to look at their own buffers without interacting with neighbors. After that, node moves packets of the selected generation into the main buffer by overwriting the first buffer positions as shown in the right-hand side of Fig. 7.

According to one embodiment the packets of generation 1 which have been stored in the positions where the ones of the new generation (generation 2) will now be placed are not dropped but they are combined with one or more other packets of the same generation (i.e. they are "coded"). E.g. the packets which are replaced by new generation 2 packets may be combined with other generation. 1 packets and may in this manner be kept in the main buffer, at least for a while. The may also be distributed to other nodes and may in this manner help other nodes which have not yet completely recovered generation 1 by completing the recovery of generation 1. This resembles the mechanism which has been explained in connection with Figures 5 and 6 in case of the deterministic approach, where also old generation packets are still kept and just the buffer size where they are stored is shrinked to free space for the new generation.

The keeping of the old packets may then be done in the encoded form, first of all to save space and secondly to improve the performance of the distribution of the old packets. The packets which are replaced may according to one embodiment be combined (encoded) with the packet or packets in the last position where still old generation data is kept and no new data is entered.

As the processing of the new generation then proceeds, the relationship of generations 1 and 2 on the right-hand side of Fig. 7 may change such that the space occupied by generation 2 will increase (as more packets come in from this generation) and the space occupied by generation 1 decreases.

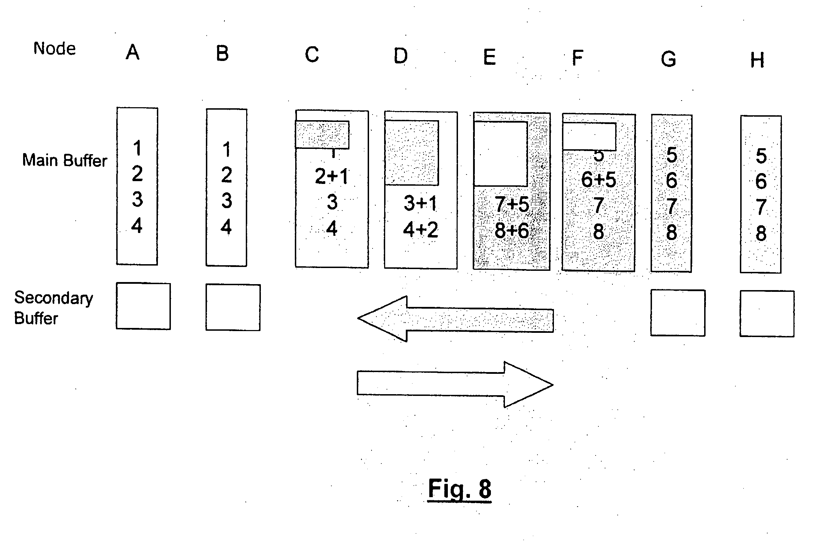

As shown on the right-hand side of Fig. 7, once the next generation has been moved into the main buffer, in the main buffer of the node there are packets belonging to two generations. This procedure has the benefit to favor the dissemination of two different generations in a bi-directional way. To better explain this concept we refer to Fig. 8 where some different nodes are represented by means of their buffers. Intermediate nodes which have two generations stored in the main buffer can transmit generation 1 in one direction and generation 2 into the opposite direction.

The procedure will now be explained in further detail in connection with Fig 8. There are shown two clusters, one having the nodes A, B , C, and D, and one having the nodes E, F, G, and H. Packets 1, 2, 3, and 4 belong to generation (initially, processed by cluster 1), and packets 5, 6, 7, and 8 belong to generation 2 processed initially by cluster 2.

Fig. 8 shows the situation which occurs after each cluster has fully processed its own generation and is open for processing a new one. E.g. node C (belonging to cluster 1) receives a packet belonging to generation 2 which replaces packet 1 in the main buffer of node C. Instead packet one is coded with packet 2, so that the coded packet can still be distributed by node C. However, node C now mainly starts with processing the packets of generation 2.

Node D is already one step further than node C. In case of node D two locations of the main buffer have been filled with packets of generation 2, and as can be seen the packets 1 to four are all coded in the main buffer for being still distributed to assist other nodes with completing recovery of generation 1.

The situation is similar for nodes E and F, except that they belong to cluster 2, have completely processed generation 2 and are now ready to process a new generations which is generation 1. One can see that node E has already in two locations of the main buffer packets of generation 1, where node F has only one packet of generation 1. Node F therefore in some sense "mirrors" node C, while node E mirrors node D.

While both clusters have started processing a new generation, as can be seen from Fig. 8 both clusters also still distribute there respective old generation packets, actually into opposite directions.

Overhearing nodes according to one embodiment can be used to determine what the next generation to process is. But this task could be difficult for those nodes that do not overhear packets of other generations. One solution to this problem according to one embodiment can be to define a simple decision rule. When a node has collected all packets of its own generation it is ready to process the next generation but if its secondary buffer is empty it has to wait for the reception of some packets from other generations or some combined packets. These combined packets can come from neighboring nodes which are already processing two generations At the reception of the first of these combined packets the node may decide to process the generation included in it. "

At the end of the decision phase which generation to process next both overhearing nodes and the others have decided which is the next generation to be processed by a node. Thus some nodes will distribute packets of generations 1 and 2 others of generations 2 and 3 and so on. This produces a sort of reorganization of nodes into clusters. One may name these clusters as virtual cluster as they do not correspond to the spatial clusters defined at the beginning of the dissemination. In particular, they are formed in a distributed way by independent decisions made by each node. To illustrate this one may refer to the Fig. 9 where the original cluster organization is shown and over that a possible virtual cluster structure is drawn. The data dissemination within the virtual cluster is performed as in the first data dissemination phase. When a node has collected all packets of the second generations it decides to process the third generation and so on. These subsequent phases again lead to virtual re-clustering. A virtual cluster is formed by the nodes which process the same generation.

According to one embodiment there is provided a mechanism to keep the virtual clusters of reasonable sizes. According to one embodiment a solution is to consider (by watching or monitoring) the farthest distance between active nodes (collecting the same generation) and keep it below a fixed threshold, computed or defined a priori. This can be done by maintaining a counter with each generation, which maintains information about the furthest node (in terms of hops) that is coding over the same generation. New nodes may then be included at the border of the reach of the current virtual cluster, if nodes at the other end of the cluster have decoded this generation, store it in FLASH, and stop sending packets from it, in other words if these node actually "leave" the cluster by ceasing to decode the generation which defines this cluster. A new node may then enter this cluster by starting to decode or process this generation if the corresponding node at the other end of the cluster has left or if the distance to the farthest node is still below the threshold. If the joining of a new node would- exceed the set threshold the joining may be postponed until one or more nodes have "left" the cluster so that the threshold is not infringed anymore.

According to one embodiment, once nodes have fully recovered the current generation, they write it into a persistent memory such as the FLASH. However, with long term data gathering it might happen that the FLASH memory cannot host any new more generation. At this point nodes should decide which generations to delete and which to keep in such memory. According to one embodiment each node may decide which generations to delete from the FLASH, e.g. based on simple rules. One embodiment uses a counter meaning the probability, for a generation, of being chosen for the deletion. Such counter is set to zero once the generation is written to FLASH, with the meaning that the probability of being deleted is null. Then, at each time slot, the counter increases its value by a small fraction towards one (the maximum value accepted for the counter). If the node overhears neighbors deleting a specific generation and such generation is hosted in its FLASH, it will decrease the corresponding counter by a fixed fraction. In this way, the node deletes with high probability generations that have not been deleted yet by the neighbors and that are old, guaranteeing, locally, a reasonable variety of available generations.

According to another embodiment, where nodes do not inform their neighbors which generation is being deleted, is to let nodes choose the generation to delete randomly. In this way overhead is avoided, however but the variety of available generations in a specific area of the network might be less preferable.

In the following some example scenarios where the embodiments of the invention may be applied will be described.

The first scenario is a cellular network. An end user, provided with mobile phone, collects a certain amount of data (sensed data) and would like to send such data to the nearest WLAN access point (low cost). The problem is that no hot spot is available in a range of several kilometers. Hence, it would be bad for him having to choose which old data to delete to make more space for the new one. The possibility of accessing RAM+FLASH might help at a first stage, but then the possibility of running out of their capacities, might be a new issue. At this point, sharing such data, with cellular sensors in that area, permits to increase again the expected lifetime of all the original data collected, until a hot spot or either a base station/server is reached. The same happens for the case where such user might move to another cell. Then, in order to keep alive the sensed data acquired in the previous eluster-cell, he should duplicate such information and share it with the other nodes within the cluster, before leaving it. This may be achieved by using embodiments of the invention.

Another application scenario is a scenario is a cellular sensor network. In the habitat and environmental monitoring, e.g. two driving applications for wireless sensor networks (WSN), to handle long data gathering is crucial. Lifetime, data reliability and persistence are fundamental to support such applications and let the end user know quickly which actions to take to face, for example, issues concerning the rescue of people in emergency scenarios, such as floods, earthquakes, fires, etc. Hence an energy-efficient mechanism for data management in a large scale WN is really suitable for a wide range of actual and future WSN applications, and for such applications embodiments of the invention can be used.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise computing device or a mobile phone or any mobile device (such as a wireless sensor) which is suitably programmed such that it is able to carry out a method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for operating a wireless network for gathering data, the wireless network comprising several nodes, said network being divided into a plurality of virtual clusters, wherein the data gathered by said network is split into generations, a generation being a set of data which is gathered within a certain time period and/or within a certain local area, and where each node of said several nodes is initially responsible for operating on a certain generation of data to code the data, disseminate it among the nodes of a virtual cluster and decode said disseminated data by the nodes of said virtual cluster, wherein a virtual cluster is defined by the nodes of said several nodes currently operating on the same generation, said method being **characterised by** comprising:
overhearing by each node of said several nodes packets from other generations,
once the current generation on which one node of said each nodes of said several nodes is operating is fully recovered, choosing by said one node of said each nodes of said several nodes which generation to operate on next based on said overheard packets from other generations.

2. The method of Claim 1, wherein said overheared packets are stored by said one node of said each nodes of said several nodes and the generation of which the highest number of packets has been stored is chosen as the generation on which said one node operates next as generation to recover.

3. The method of claim 1 or 2, wherein
each node of said several nodes has a first buffer for storing generation data currently processed, and a secondary buffer for storing generation data retrieved from overhearing;
once said one node of said each nodes of said several nodes has started to operate on a next generation, the next generation data is moved from said secondary buffer into said first buffer, where data of said previous generation is kept in said first buffer for being further distributed by said one node.

4. The method of claim 3, wherein the data of said previous generation which is kept in said first buffer is kept in coded form by combining one or more of the packets of said previous generation data.

5. The method of one of claims 1 to 3, further comprising:
limiting the size of a virtual cluster by monitoring the farthest distance between active nodes of said several nodes collecting the same generation and keeping it below a certain threshold.

6. The method of one of the preceding claims, wherein
once a generation has been fully recovered by a node of said several nodes, the data of said generation is written into a persistent memory of the node to free capacity of the non-persistent memory of said node for operating on the next generation.

7. The method of claim 6, wherein
if the persistent memory where already recovered generations are stored reaches its capacity limit, one or more generations are deleted therefrom, wherein
the generation to be deleted is chosen by a node of said several nodes randomly, or
each node of said several nodes maintains a counter for each generation stored in the persistent memory, the counter of one of said several nodes being increased with time and decreased if from an overheard packet the information has been received that another node has deleted this generation from persistent memory, and where the decision which generation to delete is made based on the value of the respective counters of said one node and said other node.

8. A node for operating a wireless network for gathering data, the wireless network comprising several nodes, said network being divided into a plurality of virtual clusters, wherein the data gathered by said network is split into generations, a generation being a set of data which are gathered within a certain time period and/or within a certain local area, and where each node of said several nodes is initially responsible for operating on a certain generation of data to code the data, disseminate it among the nodes of a virtual cluster and decode said disseminated data by the nodes of said virtual cluster, wherein a virtual cluster is defined by the nodes of said several nodes currently operating on the same generation, said node being **characterised by** comprising:
a module for overhearing by said node packets from other generations,
a module for once the current generation on which said node is operating is fully recovered, choosing by said node which generation to operate on next based on said overheard packets from other generations.

9. A node according to claim 8, further comprising:
a module being adapted such that overheard packets are stored by said node and the generation of which the highest number of packets has been stored is chosen as the generation on which said node operates next as generation to recover.

10. A node according to claim 8 or 9, wherein:
said node has a first buffer for storing generation data currently processed, and
a secondary buffer for storing generation data retrieved from overhearing; said node comprising:
a module being adapted such that once said node has started to operate on a next generation, the next generation data is moved from said secondary buffer into said first buffer, where data of said previous generation is kept in said first buffer for being further distributed by said node.

11. A node according to claim 10, said module being adapted such that the data of said previous generation which is kept in said first buffer is kept in coded form by combining one or more of the packets of said previous generation data

12. A node according to claim 8 or 9, wherein
said module being adapted such as to limit the size of a virtual cluster by monitoring the farthest distance between active nodes of said several nodes collecting the same generation and keeping it below a certain threshold.

13. A node according to one of claims 8 to 12, wherein
said module being adapted such that once a generation has been fully recovered by said node, the data of said generation is written into a persistent memory of the node to free capacity of the non-persistent memory of said node for operating on the next generation.

14. A node according to one of claims 8 to 12, further comprising:
a module being adapted such that if the persistent memory where already recovered generations are stored reaches its capacity limit, one or more generations are deleted therefrom, wherein the generation to be deleted is chosen by said node randomly, or
a module being adapted such that said node maintains a counter for each generation stored in the persistent memory, the counter being increased with time and decreased if from an overheard packet the information has been received that another node has deleted this generation from persistent memory, and where the decision which generation to delete is made based on the value of the respective counters of said node and said other node.

15. A computer program comprising computer program code which when being executed on a computer enables said computer to act as a node according to one of claims 8 to 14.

## Patentansprüche

1. Ein Verfahren zum Betreiben eines drahtlosen Netzwerks zum Sammeln von Daten und aufweisend mehrere Knoten, wobei das Netzwerk aufgeteilt ist in eine Mehrzahl von virtuellen Clustern, wobei die durch das Netzwerk gesammelten Daten in Generationen aufgespalten werden, wobei eine Generation ein Satz von Daten ist, der innerhalb einer bestimmten Zeitdauer und/oder innerhalb eines bestimmten lokalen Gebiets gesammelt wird, und wobei jeder Knoten der mehreren Knoten anfänglich verantwortlich ist, um auf einer bestimmten Generation von Daten zu operieren, um die Daten zu codieren, sie unter den Knoten eines virtuellen Clusters zu verteilen und die verteilten Daten durch die Knoten des virtuellen Clusters zu decodieren, wobei ein virtueller Cluster definiert wird durch die Knoten der mehreren Knoten, die momentan auf der gleichen Generation operieren, wobei das Verfahren **gekennzeichnet ist dadurch**, dass es aufweist:
Abhören von Paketen von anderen Generationen **durch** jeden Knoten der mehreren Knoten,
sobald die momentane Generation, auf der ein Knoten von den jeden Knoten der mehreren Knoten operiert, voll wieder hergestellt ist, Auswählen auf welcher Generation als nächstes basierend auf den abgehörten Paketen von anderen Generationen operiert werden soll **durch** den einen Knoten, der jeden Knoten der mehreren Knoten.

2. Das Verfahren nach Anspruch 1, wobei die abgehörten Pakete durch den einen Knoten der jeden Knoten der mehreren Knoten gespeichert werden und die Generation mit der höchsten Anzahl von Paketen, die gespeichert wurden, ausgewählt wird als diejenige Generation, auf der der eine Knoten als nächstes operiert, um die Generation wiederherzustellen.

3. Das Verfahren nach Anspruch 1 oder 2, wobei
jeder Knoten der mehreren Knoten einen ersten Puffer zum Speichern von momentan verarbeiteten Generationsdaten aufweist, sowie einen zweiten Puffer zum Speichern von Generationsdaten, die durch Abhören gewonnen wurden;
wobei sobald ein Knoten der jeden Knoten der mehreren Knoten begonnen hat, auf einer nächsten Generation zu operieren, die nächsten Generationsdaten aus dem zweiten Puffer in den ersten Puffer bewegt werden, wo die Daten der vorherigen Generation in dem ersten Puffer gehalten werden, um durch den einen Knoten weiter verteilt zu werden.

4. Das Verfahren nach Anspruch 3, wobei die Daten der vorherigen Generation, die in dem ersten Puffer gehalten werden, in codierter Form gehalten werden, durch Kombination von einem oder mehreren Paketen der vorherigen Generationsdaten.

5. Das Verfahren nach einem der Ansprüche 1 bis 3, ferner aufweisend:
Begrenzen der Größe eines virtuellen Clusters durch Überwachen der entferntesten Distanz zwischen aktiven Knoten der mehreren Knoten, die die gleiche Generation sammeln, und **dadurch**, dass sie unter einem bestimmten Schwellwert gehalten wird.

6. Das Verfahren nach einem der vorhergehenden Ansprüche, wobei
sobald eine Generation voll durch einen Knoten der mehreren Knoten wiederhergestellt wurde, die Daten der Generation in einen permanenten Speicher des Knotens geschrieben werden, um Kapazität für den nicht permanenten Speicher des Knotens freizusetzen, um auf der nächsten Generation zu operieren.

7. Das Verfahren nach Anspruch 6, wobei
falls der permanente Speicher, in dem bereits wiederhergestellte Generationen gespeichert werden, sein Kapazitätslimit erreicht, eine oder mehrere Generationen daraus gelöscht werden, wobei
die zu löschende Generation gewählt wird durch einen Knoten der mehreren Knoten und zwar zufällig, oder
jeder Knoten der mehreren Knoten einen Zähler für jede in dem permanenten Speicher gespeicherte Generation führt, wobei der Zähler von einem der mehreren Knoten mit der Zeit erhöht wird und verringert wird, wenn von einem abgehörten Paket die Information empfangen wird, dass ein anderer Knoten diese Generation aus seinem permanenten Speicher gelöscht hat, und wobei die Entscheidung, welche Generation zu löschen ist, getroffen wird basierend auf dem Wert der jeweiligen Zähler des einen Knotens und des anderen Knotens.

8. Ein Knoten zum Betreiben eines drahtlosen Netzwerks zum Sammeln von Daten und aufweisend mehrere Knoten, wobei das Netzwerk aufgeteilt ist in eine Mehrzahl von virtuellen Clustern, wobei die durch das Netzwerk gesammelten Daten in Generationen aufgespalten werden, wobei eine Generation ein Satz von Daten ist, der innerhalb einer bestimmten Zeitdauer und/oder innerhalb eines bestimmten lokalen Gebiets gesammelt wird, und wobei jeder Knoten der mehreren Knoten anfänglich verantwortlich ist, um auf einer bestimmten Generation von Daten zu operieren, um die Daten zu codieren, sie unter den Knoten eines virtuellen Clusters zu verteilen und die verteilten Daten durch die Knoten des virtuellen Clusters zu decodieren, wobei ein virtueller Cluster definiert wird durch die Knoten der mehreren Knoten, die momentan auf der gleichen Generation operieren, wobei der Knoten **gekennzeichnet ist dadurch**, dass er aufweist:
Ein Modul zum Abhören von Paketen von anderen Generationen,
ein Modul um, sobald die momentane Generation, auf der der Knoten operiert, voll wieder hergestellt ist, basierend auf den abgehörten Paketen von anderen Generationen **durch** den Knoten auszuwählen auf welcher Generation als nächstes operiert werden soll.

9. Ein Knoten nach Anspruch 8, ferner aufweisend:
Ein Modul, das angepasst ist, so dass die abgehörten Pakete durch den Knoten gespeichert werden und die Generation mit der höchsten Anzahl von Paketen, die gespeichert wurden, ausgewählt wird als diejenige Generation, auf der der Knoten als nächstes operiert, um die Generation wiederherzustellen.

10. Ein Knoten nach Anspruch 8 oder 9, wobei:
der Knoten einen ersten Puffer aufweist zum Speichern von momentan verarbeiteten Generationsdaten, sowie einen zweiten Puffer zum Speichern von Generationsdaten, die durch Abhören gewonnen wurden, wobei der Knoten aufweist:
ein Modul, das angepasst ist derart, dass sobald begonnen hat, auf einer nächsten Generation zu operieren, die nächsten Generationsdaten aus dem zweiten Puffer in den ersten Puffer bewegt werden, wo die Daten der vorherigen Generation in dem ersten Puffer gehalten werden, um durch den Knoten weiter verteilt zu werden.

11. Ein Knoten nach Anspruch 10, wobei das Modul angepasst ist derart, dass die Daten der vorherigen Generation, die in dem ersten Puffer gehalten werden, in codierter Form durch Kombinieren von einem oder mehreren Paketen der vorherigen Generationsdaten gehalten werden.

12. Ein Knoten nach Anspruch 8 oder 9, wobei
das Modul angepasst ist derart, dass die Größe eines virtuellen Clusters begrenzt wird durch Überwachen der entferntesten Distanz zwischen aktiven Knoten der mehreren Knoten, die dieselbe Generation sammeln, und **dadurch**, dass sie unterhalb eines bestimmten Schwellwerts gehalten wird.

13. Ein Knoten nach einem der Ansprüche 8 bis 12, wobei
das Modul angepasst ist derart, dass sobald eine Generation voll durch einen Knoten wiederhergestellt wurde, die Daten der Generation in einem permanenten Speicher des Knotens geschrieben werden, und Kapazität des nicht permanenten Speicher des Knotens freizusetzen, um auf der nächsten Generation zu operieren.

14. Ein Knoten nach einem der Ansprüche 8 bis 12, ferner aufweisend:
Ein Modul, das angepasst ist derart, dass falls der permanente Speicher, in dem bereits wiederhergestellte Generationen gespeichert werden, sein Kapazitätslimit erreicht, eine oder mehrere Generationen daraus gelöscht werden, wobei die zu löschende Generation durch den Knoten zufällig gewählt wird, oder
Ein Modul, das angepasst ist, dass der Knoten für einen Zähler führt für jede Generation, die in dem permanenten Speicher gespeichert ist, wobei der Zähler von einem der mehreren Knoten erhöht wird mit der Zeit und verringert wird, wenn von einem abgehörten Paket die Information empfangen wird, dass ein anderer Knoten diese Generation aus seinem permanenten Speicher gelöscht hat, und wobei die Entscheidung, welche Generation zu löschen ist, getroffen wird basierend auf dem Wert der jeweiligen Zähler des einen Knotens und des anderen Knotens.

15. Ein Computerprogramm aufweisend Computerprogrammcode, der, wenn er auf einem Computer ausgeführt wird, den Computer in die Lage versetzt, als ein Knoten gemäß einem der Ansprüche 8 bis 14 zu agieren.

## Revendications

1. Procédé d'exploitation d'un réseau sans fil en vue de rassembler des données, le réseau sans fil comportant une pluralité de noeuds, ledit réseau étant divisé en une pluralité de grappes virtuelles, dans lequel les données rassemblées par ledit réseau sont réparties en générations, une génération correspondant à un ensemble de données rassemblées pendant une certaine période de temps et/ou dans une certaine zone locale, et où chaque noeud de ladite pluralité de noeuds a initialement la charge d'opérer sur une certaine génération de données en vue de coder les données, de les diffuser sur les noeuds d'une grappe virtuelle et de décoder lesdites données diffusées par le biais des noeuds de ladite grappe virtuelle, dans lequel une grappe virtuelle est définie par les noeuds de ladite pluralité de noeuds opérant actuellement sur la même génération, ledit procédé étant **caractérisé par** les étapes ci-dessous consistant à :
écouter de manière indiscrète, par chaque noeud de ladite pluralité de noeuds, les paquets d'autres générations,
une fois que la génération actuelle sur laquelle opère un noeud desdits noeuds de ladite pluralité de noeuds est entièrement récupérée, choisir, par ledit noeud desdits noeuds de ladite pluralité de noeuds, la génération sur laquelle opérer ensuite sur la base desdits paquets écoutés de manière indiscrète des autres générations.

2. Procédé selon la revendication 1, dans lequel lesdits paquets écoutés de manière indiscrète sont stockés par ledit un noeud desdits noeuds de ladite pluralité de noeuds et la génération dont le nombre le plus élevé de paquets ont été stockés est choisie en tant que génération sur laquelle ledit un noeud opère ensuite en tant que génération à récupérer.

3. Procédé selon l'une des revendications 1 ou 2, dans lequel
chaque noeud de ladite pluralité de noeuds a une première mémoire tampon pour stocker les données de génération actuellement traitées, et
une seconde mémoire tampon pour stocker les données de génération récupérées par l'écoute indiscrète ; une fois que ledit un noeud desdits noeuds de ladite pluralité de noeuds a commencé à opérer sur une génération suivante, les données de génération suivante sont déplacées de ladite seconde mémoire tampon dans ladite première mémoire tampon, où les données de ladite génération précédente sont conservées dans ladite première mémoire tampon en vue d'être distribuées en outre par ledit un noeud.

4. Procédé selon la revendication 3, dans lequel les données de ladite génération précédente qui sont conservées dans ladite première mémoire tampon sont conservées sous forme codée en combinant un ou plusieurs des paquets desdites données de génération précédente.

5. Procédé selon l'une des revendications 1 à 3, consistant en outre à :
limiter la taille d'une grappe virtuelle en surveillant la distance la plus grande entre les noeuds actifs de ladite pluralité de noeuds collectant la même génération et en la maintenant au-dessous d'un certain seuil.

6. Procédé selon l'une des revendications précédentes, dans lequel
une fois qu'une génération a été entièrement récupérée par un noeud de ladite pluralité de noeuds, les données de ladite génération sont écrites dans une mémoire persistante du noeud afin de libérer la capacité de la mémoire non persistante dudit noeud pour opérer sur la génération suivante.

7. Procédé selon la revendication 6, dans lequel si la mémoire persistante où des générations déjà récupérées sont stockées atteint sa limite de capacité, une ou plusieurs générations sont supprimées de celle-ci, dans lequel
la génération à supprimer est choisie par un noeud de ladite pluralité de noeuds de manière aléatoire, ou
chaque noeud de ladite pluralité de noeuds maintient un compteur pour chaque génération stockée dans la mémoire persistante, le compteur de l'un de ladite pluralité de noeuds étant augmenté dans le temps et diminué si, à partir d'un paquet écouté de manière indiscrète, les informations ont été reçues indiquant qu'un autre noeud a supprimé cette génération de la mémoire persistante, et où la décision concernant la génération à supprimer est prise sur la base de la valeur des compteurs respectifs dudit un noeud et dudit autre noeud.

8. Noeud d'exploitation d'un réseau sans fil pour rassembler des données, le réseau sans fil comportant une pluralité de noeuds, ledit réseau étant divisé en une pluralité de grappes virtuelles, dans lequel les données rassemblées par ledit réseau sont réparties en générations, une génération étant un ensemble de données rassemblées pendant une certaine période de temps et/ou dans une certaine zone locale, et où chaque noeud de ladite pluralité de noeuds a initialement la charge d'opérer sur une certaine génération de données en vue de coder les données, de les diffuser sur les noeuds d'une grappe virtuelle et de décoder lesdites données diffusées par le biais des noeuds de ladite grappe virtuelle, dans lequel une grappe virtuelle est définie par les noeuds de ladite pluralité de noeuds opérant actuellement sur la même génération, ledit noeud étant **caractérisé en ce qu'**il comporte :
un module pour écouter de manière indiscrète, par ledit noeud, les paquets d'autres générations,
un module pour, une fois que la génération actuelle sur laquelle ledit noeud opère est entièrement récupérée, choisir, par ledit noeud, la génération sur laquelle opérer ensuite sur la base desdits paquets écoutés de manière indiscrète des autres générations.

9. Noeud selon la revendication 8, comprenant en outre :
un module conçu de sorte que les paquets écoutés de manière indiscrète sont stockés par ledit noeud et la génération dont le nombre le plus élevé de paquets ont été stockés est choisie en tant que génération sur laquelle ledit noeud opère ensuite en tant que génération à récupérer.

10. Noeud selon l'une des revendications 8 ou 9, dans lequel :
ledit noeud a une première mémoire tampon pour stocker les données de génération actuellement traitées, et
une seconde mémoire tampon pour stocker les données de génération récupérées par l'écoute indiscrète ; ledit noeud comprenant :
un module conçu de sorte que, une fois que ledit noeud a commencé à opérer sur une génération suivante, les données de génération suivante sont déplacées de ladite seconde mémoire tampon dans ladite première mémoire tampon, où les données de ladite génération précédente sont conservées dans ladite première mémoire tampon en vue d'être distribuées en outre par ledit noeud.

11. Noeud selon la revendication 10, ledit module étant conçu de sorte que les données de ladite génération précédente qui sont conservées dans ladite première mémoire tampon sont conservées sous forme codée en combinant un ou plusieurs des paquets desdites données de génération précédente.

12. Noeud selon l'une des revendications 8 ou 9, dans lequel :
ledit module est conçu de manière à limiter la taille d'une grappe virtuelle en surveillant la distance la plus grande entre les noeuds actifs de ladite pluralité de noeuds collectant la même génération et en la maintenant au-dessous d'un certain seuil.

13. Noeud selon l'une des revendications 8 à 12, dans lequel
ledit module est conçu de sorte que, une fois qu'une génération a été entièrement récupérée par ledit noeud, les données de ladite génération sont écrites dans une mémoire persistante du noeud afin de libérer la capacité de la mémoire non persistante dudit noeud pour opérer sur la génération suivante.

14. Noeud selon l'une des revendications 8 à 12, comprenant en outre :
un module conçu de sorte que, si la mémoire persistante où des générations déjà récupérées sont stockées atteint sa limite de capacité, une ou plusieurs générations sont supprimées de celle-ci, dans lequel la génération à supprimer est choisie par ledit noeud de manière aléatoire, ou
un module est conçu de sorte que ledit noeud maintient un compteur pour chaque génération stockée dans la mémoire persistante, le compteur étant augmenté dans le temps et diminué si, à partir d'un paquet écouté de manière indiscrète, les informations ont été reçues indiquant qu'un autre noeud a supprimé cette génération de la mémoire persistante, et où la décision concernant la génération à supprimer est prise sur la base de la valeur des compteurs respectifs dudit noeud et dudit autre noeud.

15. Programme informatique comportant un code de programme informatique, lequel, lorsqu'il est exécuté sur un ordinateur, permet audit ordinateur d'agir en tant que noeud selon l'une des revendications 8 à 14.
